(19) Europäisches Patentamt
European Patent Office
Office européen des brevets

(11) **EP 3 018 728 A1**

(12) **EUROPEAN PATENT APPLICATION**

(43) Date of publication:
**11.05.2016 Bulletin 2016/19**

(51) Int Cl.:
**H01M 2/10** (2006.01)

(21) Application number: **14191803.7**

(22) Date of filing: **05.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Sandvik Mining and Construction Oy 33330 Tampere (FI)**

(72) Inventor: **NOUSIAINEN, Jaakko 33330 Tampere (FI)**

(54) **Pressure equalization device, vehicle and system**

(57) A pressure equalisation device is connectable to an encasement containing gas, comprising a member for communicating with the gas inside the encasement and gas outside the encasement, wherein the member is movable by a pressure difference between the gas inside the encasement and gas outside the encasement.

202a

204a

Figure 2a

EP 3 018 728 A1

## Description

FIELD

The invention relates to a pressure equalization device connectable to an encasement containing gas.

BACKGROUND

CN202127053 (U) discloses a pressure relief valve used for lithiumion power battery, which is used for preventing deformation of a battery casing and a battery chip caused by overhigh pressure of the lithium-ion power battery. The pressure relief valve comprises a top seat and a base seat which are fixedly connected through threads, the base seat is provided with a through hole communicated with the inside of the battery, the top seat is provided with a through hole communicated with the outside, a pressing ball is arranged in the base seat, a spring is arranged between the pressing ball and the top seat, and sealing greasy is arranged between the base seat and the pressing ball. In a charging and discharging using process, when volatile substances inside the battery enable air pressure inside the battery to rise to a pressure limit of the pressure relief valve, and the pressure relief valve automatically opens to discharge air, so that deformation of the casing caused by overhigh pressure inside the battery can be avoided.

Pressure inside a lithium-ion battery is lower than the pressure outside the lithium-ion battery, when the air inside the lithium-battery is cooler than the outside air. The pressure difference between the inside air and the outside air strives to equalize by air flowing from the outside to the inside of the battery. However, the outside air includes moisture that may cause corrosion and damage to the electrical parts inside the battery.

BRIEF DESCRIPTION

An object of the present invention is to provide an encasement and a system so as to alleviate at least part of the above disadvantages. The objects of the invention are achieved by the encasement and system which are characterized by what is stated in the independent claims. The preferred embodiments of the invention are disclosed in the dependent claims.

BRIEF DESCRIPTION OF THE DRAWINGS

In the following the invention will be described in greater detail by means of preferred embodiments with reference to the accompanying drawings, in which

Figure 1 illustrates an example of a battery powered vehicle, according to an embodiment;
Figures 2a, 2b, 3a and 3b illustrate examples of pressure equalization devices connected to encasements, according to embodiments;

Figure 4 illustrates an example of a bladder connected to an encasement, according to an embodiment; and
Figure 5 illustrates an example of a system, according to an embodiment.

DETAILED DESCRIPTION OF THE INVENTION

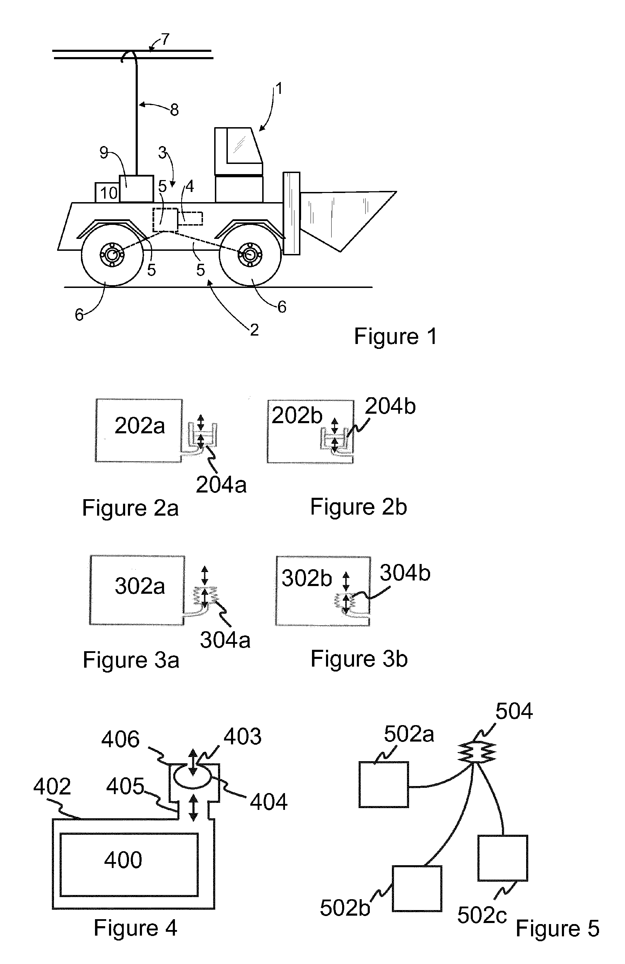

Figure 1 illustrates an example of a battery powered vehicle 1, according to an embodiment. The battery powered vehicle comprises an encasement for a battery 10, i.e. a battery case. The battery may be enclosed within the encasement for protecting the battery from damages. The battery functions as a power source of the vehicle for transportation of goods and/or people in varying environmental conditions. In varying environmental conditions, the air or other gas around the vehicle may vary in terms of one or more of temperature, humidity and pressure. The battery powered vehicle should preferably substantially maintain its operational capabilities even if the environmental conditions change.

The environmental conditions may change in terms of temperature, whereby a pressure of gas is changed to correspond to the change in temperature. The pressure of the gas and the temperature may be connected by the ideal gas ideal gas law:

$$PV = nRT \qquad (1),$$

where P is the pressure of the gas;
V is the volume of the gas;
n is the amount of substance of gas (also known as number of moles);
R is the ideal, or universal, gas constant, equal to the product of the Boltzmann constant and the Avogadro constant;
T is the temperature of the gas.

The battery powered vehicle may comprise a carriage 2 that may be moved by means of drive equipment 3. The drive equipment 3 may comprise one or more drive motors 4 and one or more power transmission means 5 for transmitting drive power to one or more wheels 6. The drive power transmission may comprise a mechanical gear system and mechanical power transmission members or, alternatively, a hydraulic or electric drive power system may be used. The drive equipment may be connected to the battery for supplying electricity to the drive equipment.

Figure 1 further shows a Direct Current (DC) trolley line 7. The DC trolley line may be located for example in a mine. The vehicle 1 may comprise a trolley arm 8 for connecting to the DC trolley line 7. The trolley arm connects the trolley line to an electrical switching means 9 for supplying electricity from the DC trolley line 7 to the vehicle 1. The electrical switching means may be connected to the drive equipment for supplying electricity to the drive equipment. Accordingly, the movement of the vehicle may be powered by electricity from the trolley line and/or the battery.

The battery powered vehicle may be a mining vehicle 1 for example a dumper, loader, drilling device, rock drilling rig or any other mining vehicle. Particularly the mining vehicles used in underground mines are exposed to varying environmental conditions. The mining vehicle 1 may be equipped with one or more mining work devices which mining work device may be one or more of the following mining work devices: rock drilling machine, bolting machine, scaling device, injection device, blasthole charger, loading device, bucket, box, measuring device, or drilling, sealing and propellant feeding equipment used in small-charge excavation.

Figures 2a, 2b, 3a, and 3b illustrate a pressure equalization device 204a, 204b, 304a, 304b connected to an encasement 202a, 202b, 302a, 302b containing gas. The encasement may be a battery case housing a battery, for example a lithium-ion battery.

The connection between the pressure equalisation device and the encasement may be a fixed connection. The fixed connection may be provided for example by welding the encasement and the pressure equalization device together or by manufacturing the pressure equalization device and the encasement into a one-piece structure. On the other hand the connection may be a detachable connection such that the pressure equalization device may be removed from the encasement. This may be preferred for maintenance of the pressure equalization device, for example. The detachable connection may be provided for example by matching threading in the encasement and the pressure equalization device. The connection is preferably additionally sealed to prevent leakage of gas. Independent of the type of connection of the pressure equalization device and the encasement, the pressure equalization device and the encasement form a variable volume container for the gas inside the encasement.

The pressure equalization device may comprise a member for communicating with the gas inside the encasement and gas outside the encasement. The member may be movable by a pressure difference between the gas inside the encasement and gas outside the encasement. In this way the pressure difference may be communicated from one gas to the other without mixing the gases, letting gas inside the encasement and/or letting gas out of the encasement.

Preferably, the movement of the member displaces gas inside the encasement, whereby the pressure of one gas is communicated to the other gas by the member between. In this way the pressure difference between the outside gas and the inside gas are equalized. In Figures 2a, 2b, 3a and 3b, the flow of gas is illustrated by arrows.

In the example of Figures 2a and 2b, the pressure equalization device comprises a cylinder. A piston inside the cylinder communicates pressure of the gas outside the encasement with gas inside the encasement, and vice versa. Stroke length of the piston inside the cylinder may be defined according to implementation and pressure differences that are equalized. In the example of Figures 3a and 3b, the pressure equalization device comprises a container of flexible material, for example rubber. The container of flexible material communicates pressure of the gas outside the encasement with gas inside the encasement, and vice versa. Volume of the container may be defined according to implementation and pressure differences that are equalized. The cylinder and the container of flexible material may operate as receptacles for the gas within the encasement and/or for the gas outside the encasement. When the pressure outside of the encasement is higher than on the inside, the cylinder and the container operate as receptacles for the gas outside the encasement. When the pressure inside of the encasement is higher than on the outside, the cylinder and the container operate as receptacles for the gas inside the encasement. Accordingly, the container of flexible material may operate like a bladder, which will be used hereafter to refer to the container of flexible material.

In Figures 2a and 3a, the cylinder and the bladder are installed at least partially outside the encasement. In this way the pressure equalization device may be maintained more easily. The location of the pressure equalization device outside of the encasement facilitates also monitoring of the operation of the pressure equalization, whereby faults in the pressure equalization device may be detected and/or maintenance of the pressure equalization device may be scheduled.

In Figures 2b and 3b, the cylinder and the bladder are installed at least partially inside the encasement. In this way the pressure equalization device may be protected by the encasement against damages.

Figure 4 illustrates an example of a bladder 404 connected to an encasement 402. The bladder may be for example the pressure equalization device in Figure 3a. The bladder may be located within a housing 406 for protecting the bladder from damages. A battery 400 may be located inside the encasement for protecting the battery pack from damages. The bladder may communicate with gas inside the encasement and gas outside the encasement. Mouth 403 of the bladder may be open to the gas outside the encasement. The housing may have an opening 405 to the encasement via which the gas inside the encasement may communicate with the bladder. Pressure of the gas inside the encasement is communicated to the gas outside the encasement by the bladder. Pressure of the outside gas that is higher than the pressure of the gas inside the housing causes the bladder to enlarge within the housing. On the other hand pressure of the outside gas that is lower than the pressure of the gas inside the housing causes the bladder to shrink within the housing. In Figure 4, the flow of gas is illustrated by arrows.

It should be appreciated that a cylinder connected to an encasement, for example in Figure 2a, may be protected by housing similar to illustrated in Figure 4 in connection with a bladder.

Figure 5 illustrates an example of a system according to an embodiment. The system may be a pressure equalization system. The system may comprise a plurality of encasements 502a, 502b, 502c connected by gas lines to a pressure equalization device 504. The encasements and the pressure equalization device may be as described in Figures 2a, 2b, 3a, 3b or 4 above. However, in Figure 5, the pressure equalization device is connected by gas lines to the encasements, and the pressure equalization device acts as a common pressure equalization device of the encasements. The common pressure equalization device allows a small number of system components, when pressure of more than one encasement is equalized.

It should be appreciated that in the described embodiments described herein the encasement and/or housing may be made of metal that is of sufficient strength for protecting the battery and pressure equalization device from damages during use for example in a mine.

An embodiment concerns a vehicle movable by drive equipment powered by at least one battery enclosed in an encasement, wherein the vehicle comprises at least one pressure equalisation device. The vehicle may be the vehicle described in Figure 1. The pressure equalization device may be the pressure equalization device described in Figures 2a, 3a, 2b, 3b or 4.

The vehicle may comprise a plurality of encasements connected by gas lines to a common pressure equalization device, for example the pressure equalization device described in Figure 5.

It will be obvious to a person skilled in the art that, as the technology advances, the inventive concept can be implemented in various ways. The invention and its embodiments are not limited to the examples described above but may vary within the scope of the claims.

**Claims**

1. A pressure equalisation device (204a, 204b, 304a, 304b) connectable to an encasement (202a, 202b, 302a, 302b) containing gas, comprising:

   at least one member for communicating with the gas inside the encasement and gas outside the encasement, wherein the member is movable by a pressure difference between the gas inside the encasement and gas outside the encasement.

2. A pressure equalisation device (204a, 204b) according to claim 1, wherein the pressure equalisation device comprises a cylinder.

3. A pressure equalisation device (304a, 304b), wherein the pressure equalisation device comprises a container of flexible material.

4. A pressure equalisation device (204a, 304a) according to claim 1, 2 or 3, wherein the pressure equalisation device is in a housing and the mouth of the pressure equalisation device is open to the gas outside the encasement and the housing has an opening to the encasement via which the gas inside the encasement may communicate with the pressure equalisation device.

5. A pressure equalisation device (204a, 204b, 304a, 304b) according to any one of claims 1 to 4, wherein the pressure equalisation device is connectable inside the encasement or outside the encasement.

6. A pressure equalisation device (204a, 204b, 304a, 304b) according to any one of the preceding claims, wherein the pressure equalization device is connectable to the encasement for forming a container having a variable volume for the gas inside the encasement.

7. A pressure equalisation device (204a, 204b, 304a, 304b) according to any one of the preceding claims, wherein the encasement is a battery case.

8. A pressure equalisation device (204a, 204b, 304a, 304b) according to any one of the preceding claims, wherein the gas is air.

9. A system comprising a plurality of encasements connected by gas lines to a pressure equalization device (204a, 204b, 304a, 304b) according to any one of claims 1 to 8.

10. A vehicle movable by drive equipment powered by at least one battery enclosed in an encasement, wherein the vehicle comprises at least one pressure equalisation (204a, 204b, 304a, 304b) device according to any one of claims 1 to 8 connected to the encasement.

11. A vehicle according to claim 10, wherein the vehicle comprises a plurality of encasements connected by gas lines to a common pressure equalization device (204a, 204b, 304a, 304b).

12. A vehicle according to claim 11, wherein the vehicle is a mining vehicle.

Figure 1

Figure 2a

Figure 2b

Figure 3a

Figure 3b

Figure 4

Figure 5

Europäisches
Patentamt

European
Patent Office

Office européen
des brevets

## EUROPEAN SEARCH REPORT

Application Number

EP 14 19 1803

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 647 758 B2 (KRITZER PETER [DE] ET AL) 11 February 2014 (2014-02-11) * page 6, line 45ff; figures 1, 5-9 * | 1-12 | INV. H01M2/10 |
| X | US 2008/318121 A1 (TAKAGI MASARU [JP]) 25 December 2008 (2008-12-25) * paragraph [0063]; figures 4A, 4B * | 1-12 | |
| X | FR 2 633 778 A1 (GINDRE JEAN [FR]) 5 January 1990 (1990-01-05) * page 5, line 22ff; figures 3-5 * | 1-12 | |

TECHNICAL FIELDS
SEARCHED       (IPC)

H01M

The present search report has been drawn up for all claims

| Place of search | Date of completion of the search | Examiner |
|---|---|---|
| Munich | 6 May 2015 | Del Piero, Giannino |

## ANNEX TO THE EUROPEAN SEARCH REPORT
## ON EUROPEAN PATENT APPLICATION NO.

EP 14 19 1803

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2015

| Patent document cited in search report | | Publication date | Patent family member(s) | | Publication date |
|---|---|---|---|---|---|
| US 8647758 | B2 | 11-02-2014 | BR PI1004252 A2 <br> CA 2713613 A1 <br> EP 2290729 A1 <br> US 2011045324 A1 | | 15-05-2012 <br> 24-02-2011 <br> 02-03-2011 <br> 24-02-2011 |
| US 2008318121 | A1 | 25-12-2008 | CN 101330160 A <br> JP 4434237 B2 <br> JP 2009004193 A <br> US 2008318121 A1 | | 24-12-2008 <br> 17-03-2010 <br> 08-01-2009 <br> 25-12-2008 |
| FR 2633778 | A1 | 05-01-1990 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202127053 U